# EUROPÄISCHE PATENTSCHRIFT

(11) **EP 2 850 939 B1**
(45) Veröffentlichungstag und Bekanntmachung des Hinweises auf die Patenterteilung: **28.11.2018**
(21) Anmeldenummer: 14177016.4
(22) Anmeldetag: 15.07.2014
(51) Int. Cl.: A01F 15/07

(54) **Wickelvorrichtung und eine diese verwendende Rundballenpresse**
Wrapping device and round baler using the same
Dispositif d'enroulement et presse à balles rondes l'utilisant

(30) Priorität: 23.09.2013 DE 102013015642
(43) Veröffentlichungstag der Anmeldung: 25.03.2015
(73) Patentinhaber: Usines CLAAS France, 57141 Metz (FR)
(72) Erfinder: Baros, Geoffroy, 90130 Montreux Chateau (FR); Hasse, Lionel, 57420 Solgne (FR)
(74) Vertreter: Budach, Steffen

(56) Entgegenhaltungen:
- EP-A1- 2 050 330
- DE-A1- 3 311 279
- DE-T2- 60 112 456

## Beschreibung

Die vorliegende Erfindung betrifft eine Wickelvorrichtung zum Umwickeln von Ballen, insbesondere von landwirtschaftlichem Erntegut, sowie eine Ballenpresse, die eine solche Wickelvorrichtung verwendet.

Aus EP 2 050 330 A1 ist eine Ballenpresse bekannt, die in einem vorderen Bereich eine Presskammer zum Formen eines Ballens sowie, hinter der Presskammer, eine Wickelvorrichtung zum Umwickeln eines in der Presskammer fertig gestellten und über eine Klappe an der Rückseite der Presskammer ausgegebenen Ballens aufweist. Das Umwickeln mit einer luftundurchlässigen Folie ermöglicht ein Silieren des Ballens unter freiem Himmel und ist daher für die Viehfuttererzeugung attraktiv. Im Vergleich zu einer Ballenpresse ohne Wickelvorrichtung wird durch die Integration der Wickelvorrichtung ein erheblicher Produktivitätszuwachs erzielt, da die Ballen nicht mehr vom Feld aufgenommen werden müssen, um sie nachträglich zu umwickeln. Nachteilig ist jedoch der erhebliche Längenzuwachs, der mit der Integration der Wickelvorrichtung einhergeht. Er macht die Ballenpresse schwierig zu manövrieren und erhöht erheblich ihren Platzbedarf in einem Unterstand bei Nichtgebrauch.

DE 601 12 456 T2 offenbart eine gattungsgemäße Wickelvorrichtung.

Aufgabe der vorliegenden Erfindung ist, eine Wickelvorrichtung mit vermindertem Platzbedarf zu schaffen, bzw. eine Ballenpresse zu schaffen, die ohne Einbuße an Leistungsfähigkeit gegenüber einer herkömmlichen Ballenpresse mit integrierter Wickelvorrichtung kürzer baut.

Die Lösung der Aufgabe erfolgt erfindungsgemäß durch die kennzeichnenden Merkmale des Anspruchs 1. Vorteilhafte Ausgestaltung der Erfindung sind in den Unteransprüchen angegeben.

Eine Wickelvorrichtung zum Umwickeln von Ballen insbesondere von landwirtschaftlichem Erntegut umfaßt einen Wickeltisch zum Unterstützen eines zu umwickelnden Ballens und zum Rotieren des Ballens um eine horizontale Achse und wenigstens einen auf einer horizontalen Bahn um den Ballen bewegbaren Wickelmaterialspender , wobei die Länge des Arms gekoppelt an seine Drehung um die Achse variabel ist. Dadurch ist es insbesondere möglich, den Wickelmaterialspender in geringem Abstand vom Ballen zu führen und so den zum Umwickeln des Ballens benötigten Freiraum zu verkleinern. Eine mit der erfindungsgemäßen Wickelvorrichtung ausgestattete Ballenpresse lässt sich somit kompakter bauen.

Der Abstand einer von dem Wickelmaterialspender verfolgten Bahn vom Mittelpunkt des in Draufsicht im wesentlichen rechteckigen Ballens ist in wenigstens zwei zu Ecken des Ballens benachbarten äußeren Bahnabschnitten größer als in einem die äußeren Bahnabschnitte verbindenden inneren Bahnabschnitt. Indem auf diese Weise an wenigstens einer Seite des Ballens der Wickelmaterialspender anstelle der herkömmlichen Kreisbahn eine näher am Ballen verlaufende Bahn verfolgt, kann an dieser Seite der Abstand zur Presskammer vermindert werden, ohne dass dies die Beweglichkeit einer Ausgabeklappe der Presskammer einschränkt. Der innere Bahnabschnitt wird im Allgemeinen einen größeren Krümmungsradius aufweisen als die daran angrenzenden äußeren Bahnabschnitte. Im Idealfall verläuft der innere Bahnabschnitt geradlinig und parallel zu einer benachbarten Flanke des Ballens. Die Steuerung der Längenveränderung des Arms ist besonders einfach, wenn die vertikale Achse, um die der Arm rotiert, durch den Mittelpunkt des Ballens verläuft.

Der Arm weist ein achsnahes und wenigstens ein achsfernes Element auf, die radial beweglich ineinander greifen. Insbesondere kann eines der Elemente als eine Schiene fungieren, entlang derer das andere beweglich ist. Zum Antreiben einer die Länge des Arms variierenden Bewegung weist der Arm ein hydraulisches oder pneumatisches Stellglied auf. Ventile zum Beaufschlagen des Stellglieds mit Druckmedium können durch die Drehung des Arms gesteuert sein.

Einer alternativen Ausgestaltung zufolge kann eine drehfest angeordnete Kulisse vorgesehen sein, die von dem Arm im Laufe seiner Drehung um die Achse abgetastet wird.

Noch einer alternativen Ausgestaltung zufolge, die nicht unter die beanspruchte Erfindung fällt, kann der Arm einen von seiner Drehung um die Achse angetriebenen Exzenter umfassen. Um den Arm an jeder Ecke des Balles zu verlängern und ihn zwischen den Ecken zu verkürzen, sollte der Exzenter zweckmäßigerweise pro Umdrehung des Arms um die vertikale Achse vier Umdrehungen ausführen. Entsprechend kann auch das hydraulische oder pneumatische Stellglied der weiter oben erwähnten Ausgestaltung zweckmäßigerweise vier Bewegungszyklen pro Umdrehung des Arms ausführen.

Einer weiteren alternativen Ausgestaltung zufolge, die nicht unter die beanspruchte Erfindung fällt, kann das achsferne Element des Arms mit dem achsnahen Element zusätzlich schwenkbar verbunden und an einen Antriebskörper angelenkt sein, der um die vertikale Achse mit einer anderen Drehzahl rotiert als das achsnahe Element. Um vier Zyklen der Abstandsänderung zwischen Wickelmaterialspender und Mittelpunkt des Ballens bei jeder Umdrehung des Arms zu realisieren, kann die Geschwindigkeit des Rotors insbesondere das Fünffache oder, bei gegensinniger Drehrichtung, das Dreifache der Drehgeschwindigkeit des Arms betragen.

Wenn sich zwei Wickelmaterialspender bezüglich der vertikalen Achse isometrisch gegenüber liegen, kann der Wickelvorgang beschleunigt und eine Unwucht beim Umwickeln des Ballens vermieden werden.

Die Aufgabe wird ferner gelöst durch eine Rundballenpresse mit einer Presskammer und einer Wickelvorrichtung nach einer der vorhergehenden Ansprüche. Indem der innere Bahnabschnitt an einer der Presskammer zugewandten Flanke des Ballens verläuft, erlaubt er es, den Abstand zwischen Wickeltisch und Presskammer zu verkürzen und dadurch die gesamte Rundballenpresse kompakter zu bauen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Seitenansicht einer erfindungsgemäßen Ballenpresse;
- Fig. 2: eine Draufsicht auf eine Wickelvorrichtung der Ballenpresse;
- Fig. 3: einen schematischen axialen Teilschnitt durch die Wickelvorrichtung entlang der Ebene III-III aus Fig. 4 gemäß einer ersten Ausgestaltung;
- Fig. 4: einen schematischen Teilschnitt durch die Wickelvorrichtung senkrecht zu ihrer Drehachse, entlang der Ebene IV-IV aus Fig. 3;
- Fig. 5: eine schematische Draufsicht auf die Wickelvorrichtung gemäß einer zweiten Ausgestaltung, die nicht unter die beanspruchte Erfindung fällt;
- Fig. 6: eine schematische Draufsicht gemäß einer dritten Ausgestaltung, die nicht unter die beanspruchte Erfindung fällt;
- Fig. 7: einen Schnitt entlang der Drehachse gemäß der dritten Ausgestaltung;
- Fig. 8: einen Schnitt entlang der Drehachse gemäß einer vierten Ausgestaltung, die nicht unter die beanspruchte Erfindung fällt;
- Fig. 9: eine Draufsicht auf die Wickelvorrichtung der vierten Ausgestaltung in verschiedenen Phasen ihrer Bewegung.

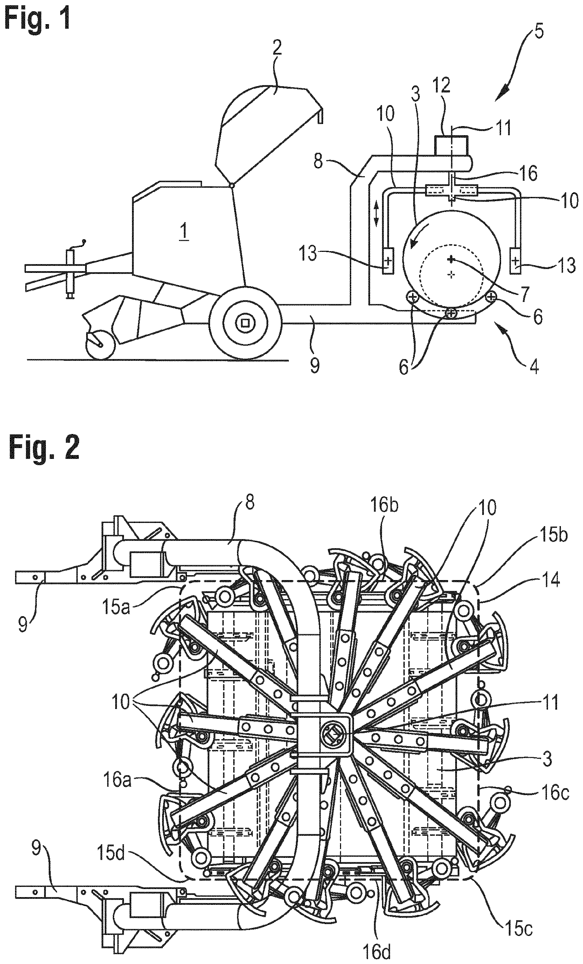

Fig. 1 zeigt in einer Seitenansicht eine Ballenpresse gemäß der vorliegenden Erfindung. Ein vorderer Teil der Ballenpresse ist von einer Presskammer 1 eingenommen. Ihre Arbeitsweise und ihre Aufbau sind an sich bekannt und brauchen daher hier nicht im Detail erläutert zu werden. Die Presskammer 1 formt zugeführtes Erntegut zu einem zylindrischen Ballen mit horizontaler Achse und umschlingt diesen mit Bindematerial, sobald er eine gewünschte Größe erreicht hat. So wird ein Ballen erzeugt, der im Wesentlichen die Form eines Zylinders mit horizontaler Achse hat. In der Praxis ist der Ballen häufig leicht tonnenförmig. Eine Ausgabeklappe 2 am Heck der Presskammer 1 ist in offener Stellung gezeigt, um den fertigen Ballen 3 auf einen Wickeltisch 4 einer hinter der Presskammer 1 angeordneten Wickelvorrichtung 5 auszugeben.

Der Wickeltisch 4 umfasst mehrere drehbare Walzen 6 und um die Walze 6 herumgeschlungene, den Ballen 3 unterstützende Bänder. Indem eine Walze 6 drehangetrieben wird, kann der Ballen 3 um seine horizontale Symmetrieachse 7 in Drehung versetzt werden.

Ein Torbogen 8 ist zwischen Presskammer 1 und Wickeltisch 4 an einem Trägerrahmen 9 der Ballenpresse angeordnet und erstreckt sich in der Seitenansicht winkelförmig bis über den Wickeltisch 4. An einer hinteren Spitze des Torbogens 8 sind zwei Arme 10, angetrieben von einem Motor 12, um eine mittig durch den Ballen 3 verlaufende vertikale Achse 11 drehbar montiert. Die Arme 10 tragen jeweils einen Wickelmaterialspender 13 wie etwa eine Rolle mit um den Ballen 3 herum zu wickelnder Kunststofffolie.

Fig. 2 zeigt eine Draufsicht auf die Wickelvorrichtung 5. Der an sich zylindrische Ballen 3 erscheint in der Draufsicht im Wesentlichen rechteckig, insbesondere quadratisch. Um den Ballen 3 zu umwickeln, werden die Arme 10 um den Ballen 3 herumbewegt, während dieser gleichzeitig vom Wickeltisch 4 um seine horizontale Symmetrieachse 7 rotiert wird. Die Fig. 2 zeigt die beiden Arme 10 jeweils in einer Mehrzahl von Stellungen, die sie auf ihrer Bewegung um den Ballen 3 durchlaufen. Wie hier durch eine gestrichelte Linie angedeutet, ist die Bahn 14 der Wickelmaterialspender 13 nicht kreisförmig, sondern im Wesentlichen rechteckig, insbesondere quadratisch, wobei die vertikale Achse 11 den Mittelpunkt des Quadrats bildet und Bahnabschnitte 15a, b, c, d, in denen der Abstand der Rollen 13 von der Achse 11 groß ist und die Bewegungsrichtung der Wickelmaterialspender 13 sich auf kurzer Strecke stark ändert, jeweils den Ecken des Ballens 3 benachbart sind und miteinander durch sich entlang der Flanken des Ballens 3 erstreckende schwach gekrümmte oder gar geradlinige Bahnabschnitte 16a, b, c, d, verbunden sind. Da sich einer dieser Bahnabschnitte, 16a, entlang der der Presskammer 1 zugewandten Flanke des Ballens 3 erstreckt, kann der Abstand zwischen Wickeltisch 4 und Presskammer 1 gering gemacht werden, ohne dass die Arme 10 bzw. die Wickelmaterialspender 13 bei ihrer Bewegung an die Ausgabeklappe 2 anstoßen, auch wenn diese sich nach Ausgabe des Ballens 3 wieder in der die Presskammer 1 verschließenden Stellung befindet.

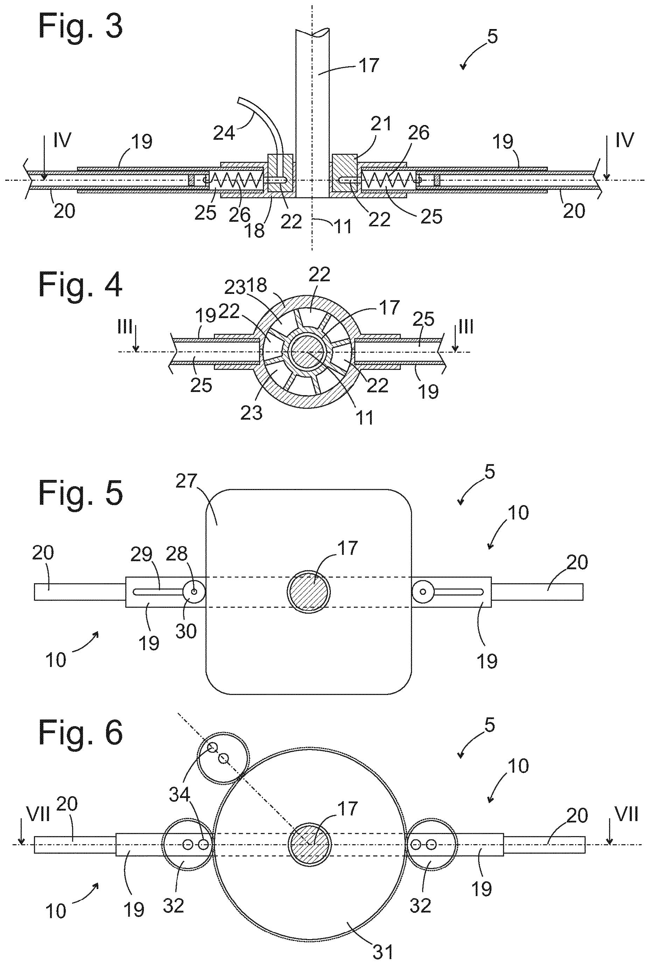

Fig. 3 zeigt einen zentralen Teil der Wickelvorrichtung 5 gemäß einer ersten Ausgestaltung der Erfindung in einem Schnitt entlang der vertikalen Achse 11. Eine nur zum Teil dargestellte, sich in Richtung der Achse 11 erstreckende Welle 17 ist in ihrem nicht dargestellten Teil mit dem Motor 12 verbunden. An der Welle 17 ist eine Nabe 18 drehfest angebracht, in der jeweils ein achsnahes Element 19 der beiden Arme 10 verankert ist. Die achsnahen Elemente 19 sind jeweils rohrförmig ausgebildet, und ein achsfernes Element 20 ist radial verschiebbar in jedem achsnahen Element 19 aufgenommen. Das achsnahe Element 19 bildet jeweils einen Zylinder und das achsferne Element 20 einen Kolben eines Stellzylinders und begrenzen eine Arbeitskammer 25.

Ein Verteilerring 21 ist drehfest mit dem Torbogen 8 verbunden und greift in eine sich ringförmig um die Welle 17 erstreckende Nut der Nabe 18 ein. Wie in Fig. 4 zu erkennen, sind in dem Verteilerring 21 acht zu einem äußeren Rand des Verteilerrings 21 hin offene Randaussparungen 22, 23 gebildet. Die Randaussparungen 22 sind mit einer Druckluftversorgungsleitung 24, die Randaussparungen 23 mit der Umgebung verbunden. In Umfangsrichtung des Randes wechseln die Aussparungen 22 und 23 miteinander ab. Indem die mit Druckluftversorgungsleitung 24 verbundenen Aussparung 22 jeweils dann mit einer von den Elementen 19, 20 gebildeten Arbeitskammer 25 kommunizieren, wenn sich die Arme 10 zum Mittelpunkt eines der Bahnabschnitte 16a-d zum nachfolgenden Bahnabschnitt 15a-d bewegen und auf dem Weg von Bahnabschnitt 15a-d zum Mittelpunkt des nächsten Bahnabschnitts 16a-d die Arbeitskammern 25 über die Aussparungen 23 mit der Umgebung verbunden sind, und die achsfernen Elemente 20 von einer Zugfeder 26 zur Achse 11 gezogen werden, werden die Wickelmaterialspender 13 auf der in Fig. 2 gezeigten, im Wesentlichen rechteckigen Bahn 14 geführt.

Der Stellzylinder könnte einer Abwandlung zufolge doppelt wirkend ausgebildet sein, um sowohl Einals auch Auswärtsbewegung der achsfernen Elemente 20 anzutreiben; die Zugfeder 26 könnte dann entfallen.

Fig. 5 zeigt eine Draufsicht auf die Wickelvorrichtung 5 gemäß einer zweiten Ausgestaltung, die nicht unter die beanspruchte Erfindung fällt. Die Welle 17 kreuzt hier eine drehfest am (nicht dargestellten) Torbogen 8 angeordnete Kulisse 27. Die achsnahen Elemente 19 sind wiederum als Rohre ausgebildet, in denen die achsfernen Elemente 20 verschiebbar sind. An den achsfernen Elementen befestigte Zapfen 28 erstrecken sich jeweils durch einen Schlitz 29 des achsnahen Elements 19 des Arms 10 und tragen jeweils eine Rolle 30, die von einer nicht dargestellten, an beiden achsfernen Elementen 20 angreifenden Zugfeder gegen den Umfang der Kulisse 27 beaufschlagt ist.

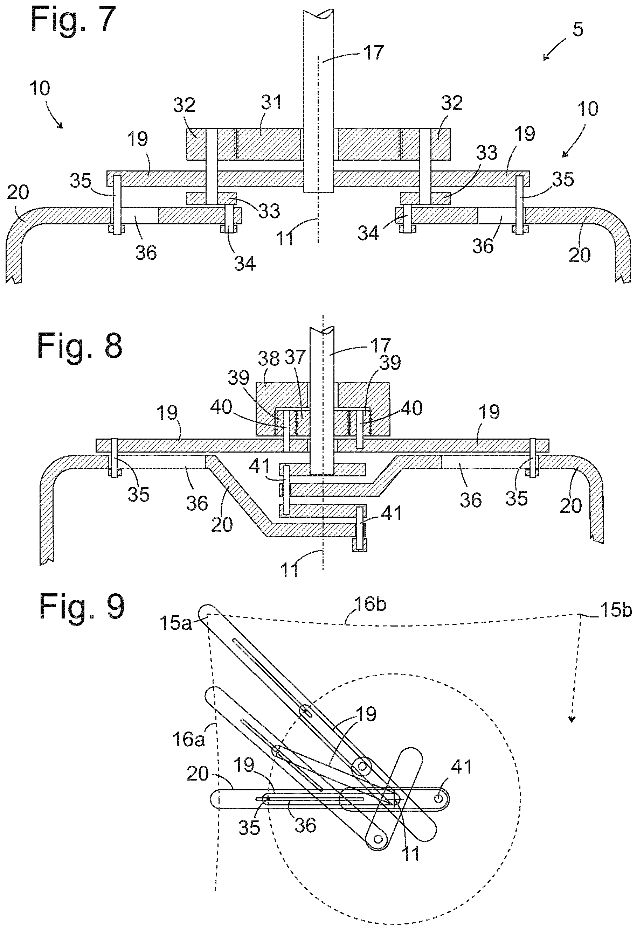

Eine dritte Ausgestaltung, die nicht unter die beanspruchte Erfindung fällt, ist in Fig. 6 in einer Draufsicht und in Fig. 7 in einem Schnitt entlang der vertikalen Achse 11 dargestellt. Anstelle der Kulisse 27 ist hier ein Zahnrad 31 von großem Durchmesser konzentrisch zur Welle 17 angeordnet und drehfest am Torbogen 8 verankert. Die achsnahen Elemente 19 der Arme 10 tragen jeweils ein kleines Zahnrad 32, dessen Zähnezahl ein Fünftel derjenigen des großen Zahnrades 31 beträgt und das mit dem großen Zahnrad 31 kämmt. Wie in Fig. 7 zu erkennen, sind die Zahnräder 32 jeweils mit Exzentern 33 drehfest verbunden, die einen in die achsfernen Elemente 20 drehbar eingreifenden Zapfen 34 tragen. Weitere, an den Spitzen der achsnahen Elemente 19 angebrachte Zapfen 35 durchsetzen jeweils einen Schlitz 36 der achsfernen Elemente 20.

In der in den Fig. 6 und 7 gezeigten Konfiguration befinden sich die Zapfen 34 jeweils in ihrer zur Achse 11 nächst benachbarten Stellung, sodass die Entfernung der in der Fig. nicht gezeigten, an den Enden der Arme 10 montierten Wickelmaterialspender 13 von der Achse 11 minimal ist.

Wenn die Arme 10 aus der in Fig. 6 gezeigten Stellung um 45° im Uhrzeigersinn weiter rotiert sind und einer der Arme entlang der strichpunktierten Linie der Fig. 6 ausgerichtet ist, dann ist das Zahnrad 32 dieses Arms 10, bedingt durch das Übersetzungsverhältnis der Zahnräder 31, 32, um 5 x 45° = 225° rotiert, und der Zapfen 34 befindet sich in einer Stellung maximaler Entfernung von der Achse 11, so dass der Arm 10 in dieser Stellung seine maximale Länge erreicht und die Wickelmaterialspender 13 sich auf einer insgesamt rechteckähnlichen Bahn um den Ballen 3 herumbewegen.

Eine ähnliche Wirkung ist mit der in Fig. 8 im Schnitt entlang der Achse 11 gezeigten Ausgestaltung, die nicht unter die beanspruchte Erfindung fällt, erreichbar. Die Welle 17 trägt hier ein Sonnenrad 37 eines Planetengetriebes, dessen Hohlrad 38 am Torbogen 8 fest ist und dessen Planetenräder 39 um an den achsnahen Elementen 19 der Arme 10 verankerte Wellen 40 drehbar sind und eine Drehung der Arme 10 um die Achse 11 mit einem Fünftel der Drehzahl der Welle 17 antreiben.

Das untere Ende der Welle 17 ist als Kurbelwelle mit zwei Hubzapfen 41 ausgebildet, welche um die Achse 11 rotierende und an den achsfernen Elementen 20 der beiden Arme 10 angreifende Antriebskörper bilden. An den Enden der achsnahen Elemente 19 verankerte Zapfen 35 durchgreifen wiederum Schlitze 36 der achsfernen Elemente 20, um sowohl eine radiale Bewegung der achsfernen Elemente 20 als auch eine Pendelbewegung um die von den Zapfen 35 definierten Achsen zuzulassen.

Der aus diesem Aufbau resultierende Bewegungsablauf eines Arms 10 ist in Fig. 9 anhand einer schematischen Draufsicht gezeigt. Die Drehrichtung des Arms 10 ist im Uhrzeigersinn; in einer ersten Konfiguration befindet sich das achsnahe Element 19 des Arms 10 in einer Neun-Uhr-Stellung in Bezug auf die Achse 11, der Wellenzapfen 41 befindet sich in Drei-Uhr-Stellung, der Zapfen 35 durchgreift den Schlitz 36 in der Nähe von dessen achsfernem Ende, und der Radius des Armes 10 ist minimal.

In einer zweiten Konfiguration sind das achsnahe Element 19 um 45° und der Hubzapfen 41 um 225° im Uhrzeigersinn gedreht, und der Zapfen 35 befindet sich in der Mitte des Schlitzes 36. Nach einer weiteren Drehung des achsnahen Elements 19 um 45° ist der Hubzapfen 41 in einer Linie zwischen der Achse 11 und den Zapfen 35 positioniert, der Zapfen 35 befindet sich an einem inneren Ende des Schlitzes 36, und der Arm 10 hat seine maximale Länge erreicht.

Das Ende des Armes 10 hat währenddessen einen nahezu geradlinigen Weg, entsprechend einer Hälfte des Bahnabschnitts 16a, zurückgelegt. In der dritten gezeigten Konfiguration ist der Bahnabschnitt 15a erreicht; hier ändert sich die Richtung der Bewegung abrupt, so dass im Laufe einer Umdrehung des Armes 10 der von ihm getragene Wickelmaterialspender 13 eine nahezu quadratische Bahn beschreibt.

### Bezugszeichen

- 1: Presskammer
- 2: Ausgabeklappe
- 3: Ballen
- 4: Wickeltisch
- 5: Wickelvorrichtung
- 6: Walze
- 7: Symmetrieachse
- 8: Torbogen
- 9: Trägerrahmen
- 10: Arm
- 11: Achse
- 12: Motor
- 13: Wickelmaterialspender
- 14: Bahn
- 15a-d: Bahnabschnitt
- 16a-d: Bahnabschnitt
- 17: Welle
- 18: Nabe
- 19: achsnahes Elemente
- 20: achsfernes Element
- 21: Verteilerring
- 22: Randaussparung
- 23: Randaussparung
- 24: Druckluftversorgungsleitung
- 25: Arbeitskammer
- 26: Zugfeder
- 27: Kulisse
- 28: Zapfen
- 29: Schlitz
- 30: Rolle
- 31: Zahnrad
- 32: Zahnrad
- 33: Exzenter
- 34: Zapfen
- 35: Zapfen
- 36: Schlitz
- 37: Sonnenrad
- 38: Hohlrad
- 39: Planetenrad
- 40: Welle
- 41: Wellenzapfen
- 42: Hubzapfen

## Patentansprüche

1. Wickelvorrichtung zum Umwickeln von Ballen (3) insbesondere von landwirtschaftlichem Erntegut, mit einem Wickeltisch (4) zum Unterstützen eines zu umwickelnden Ballens (3) und zum Rotieren des Ballens (3) um eine horizontale Achse (7) und mit wenigstens einem von einem um eine vertikale Achse (11) rotierenden Arm (10) getragenen Wickelmaterialspender (13), wobei die Länge des Arms (10) gekoppelt an seine Drehung um die Achse (11) variabel ist, wobei der Abstand einer von dem Wickelmaterialspender (13) verfolgten Bahn (14) von der Achse (11) in wenigstens zwei zu Ecken des in Draufsicht im wesentlichen rechteckigen Ballens (3) benachbarten äußeren Bahnabschnitten (15a-d) größer ist als in einem die äußeren Bahnabschnitte (15a-d) verbindenden inneren Bahnabschnitt (16a-d), wobei der Arm (10) ein achsnahes (19) und wenigstens ein achsfernes Element (20) aufweist, die radial beweglich ineinandergreifen, **dadurch gekennzeichnet, dass** der Arm (10) ein hydraulisches oder pneumatisches Stellglied zum Antreiben einer die Länge des Arms (10) variierenden Bewegung aufweist.

2. Wickelvorrichtung nach Anspruch 1, **dadurch gekennzeichnet, dass** der innere Bahnabschnitt (16a-d) einen größeren Krümmungsradius aufweist als die äußeren Bahnabschnitte (15a-d).

3. Wickelvorrichtung nach einem der vorhergehenden Ansprüche, **dadurch gekennzeichnet, dass** zwei Wickelmaterialspender (13) sich bezüglich der vertikalen Achse (11) symmetrisch gegenüberliegen.

4. Rundballenpresse mit einer Presskammer (1), einer Wickelvorrichtung (5) nach einem der vorhergehenden Ansprüche und einer Ausgabeklappe (2), die zwischen einer die Presskammer (1) verschließenden Stellung und einer Offenstellung, die den Übergang eines Ballens (3) von der Presskammer (1) zur Wickelvorrichtung (5) ermöglicht, bewegbar ist, wobei der innere Bahnabschnitt (16a) an einer der Presskammer (1) zugewandten Flanke des Ballens (3) verläuft.

## Claims

1. Wrapping device for wrapping bales (3) in particular of agricultural harvested material, with a wrapping table (4) for supporting a bale (3) to be wrapped and for rotating the bale (3) about a horizontal axis (7) and with at least one wrapping material dispenser (13) borne by an arm (10) rotating about a vertical axis (11), wherein
the length of the arm (10) coupled with its rotation about the axis (11) is variable, wherein the distance of a path (14) followed by the wrapping material dispenser (13) from the axis (11) is greater in at least two outer path sections (15a-d) adjacent to corners of the bale (3), substantially rectangular viewed from above, than in an inner path section (16a-d) connecting the outer path sections (15a-d), wherein the arm (10) has an element (19) close to the axis and at least one element (20) remote from the axis which engage in each other radially movable, **characterized in that** the arm (10) has a hydraulic or pneumatic control element for driving a movement varying the length of the arm (10) .

2. Wrapping device according to claim 1, **characterized in that** the inner path section (16a-d) has a greater radius of curvature than the outer path sections (15a-d).

3. Wrapping device according to one of the preceding claims, **characterized in that** two wrapping material dispensers (13) lie symmetrically opposite one another relative to the vertical axis (11).

4. Round baler with a baling chamber (1), a wrapping device (5) according to one of the preceding claims and an output hatch (2) which is movable between a position closing the baling chamber (1) and an open position which makes possible the transfer of a bale (3) from the baling chamber (1) to the wrapping device (5), wherein the inner path section (16a) runs along a flank of the bale (3) facing the baling chamber (1).

## Revendications

1. Dispositif d'enrubannage pour enrubanner des balles (3), en particulier de produit agricole récolté, comprenant une table d'enrubannage (4) pour supporter une balle à enrubanner (3) et pour faire tourner la balle (3) autour d'un axe horizontal (7) et comprenant au moins un distributeur de matériau d'enrubannage (13) porté par un bras (10) tournant autour d'un axe vertical (11), la longueur du bras (10) étant variable en fonction de sa rotation autour de l'axe (11), la distance d'une trajectoire (14) suivie par le distributeur de matériau d'enrubannage (13) par rapport à l'axe (11) étant plus grande, dans au moins deux portions de trajectoire extérieures (15a-d) voisines de coins de la balle (3) sensiblement rectangulaire en vue de dessus, que dans une portion de trajectoire intérieure (16ad) reliant les portions de trajectoire extérieures (15a-d), le bras (10) comportant un élément proche de l'axe (19) et au moins un élément distant de l'axe (20), lesquels s'emboîtent l'un dans l'autre avec une mobilité radiale, **caractérisé en ce que** le bras (10) comporte un organe d'actionnement hydraulique ou pneumatique pour commander un mouvement faisant varier la longueur du bras (10).

2. Dispositif d'enrubannage selon la revendication 1, **caractérisé en ce que** la portion de trajectoire intérieure (16a-d) présente un rayon de courbure supérieur à celui des portions de trajectoire extérieures (15a-d).

3. Dispositif d'enrubannage selon une des revendications précédentes, **caractérisé en ce que** deux distributeurs de matériau d'enrubannage (13) se font face symétriquement par rapport à l'axe vertical (11).

4. Presse à balles rondes comprenant une chambre de pressage (1), un dispositif d'enrubannage (5) selon une des revendications précédentes et une porte de sortie (2) qui est déplaçable entre une position fermant la chambre de pressage (1) et une position ouverte qui permet le transfert d'une balle (3) de la chambre de pressage (1) au dispositif d'enrubannage (5), la portion de trajectoire intérieure (16a) passant le long d'un flanc de la balle (3) tourné vers la chambre de pressage (1).
